# EUROPEAN PATENT APPLICATION

(11) **EP 4 641 646 A1**
(43) Date of publication of application: **29.10.2025**
(21) Application number: 24760517.3
(22) Date of filing: 08.02.2024
(51) Int. Cl.: H01M 4/04, H01M 10/052

(54) **METHOD FOR FORMING PATTERNS ON ELECTRODE AND METHOD FOR MANUFACTURING ELECTRODE**

(30) Priority: 23.02.2023 KR 20230024346; 07.02.2024 KR 20240018640
(71) Applicant: LG Energy Solution, Ltd., Seoul 07335 (KR)
(72) Inventor: KIM, Soon, Daejeon 34122 (KR); CHOI, Kyuhyun, Daejeon 34122 (KR); CHUNG, Changkwon, Daejeon 34122 (KR); GU, Jaeon, Daejeon 34122 (KR); CHUN, Dong Jae, Daejeon 34122 (KR)
(74) Representative: Plasseraud IP
(86) International application number: PCT/KR2024/001959
(87) International publication number: WO 2024/177327

(57) **Abstract**

According to an embodiment of the present disclosure, there is provided a method for forming patterns on a traveling electrode by providing an active material onto a current collector, the method comprising the steps of: (A) moving a doctor blade to the traveling electrode so that the end of the tip of the doctor blade faces the current collector; (B) maintaining the state in which the doctor blade has moved to the traveling electrode for a first predetermined period; and (C) moving the doctor blade in an opposite direction from the electrode.

## Description

### [TECHNICAL FIELD]

### Cross Citation with Related Application(s)

This application claims the benefit of Korean Patent Application No. 10-2023-0024346 filed on February 23, 2023 and Korean Patent Application No. 10-2024-0018640 filed on February 7, 2024 in the Korean Intellectual Property Office, the disclosures of which are incorporated herein by reference in their entirety.

The present disclosure relates to a method for forming patterns on an electrode and a method for manufacturing an electrode having patterns formed thereon, and more specifically, to a method for forming patterns on an electrode and a method for manufacturing an electrode, which neatly process a boundary part of patterns during electrode pattern formation in the electrode process and also uniformize the thickness of the active material provided on the current collector.

### [BACKGROUND]

In modern society, as portable devices such as a mobile phone, a notebook computer, a camcorder and a digital camera has been daily used, the development of technologies in the fields related to mobile devices as described above has been activated. In addition, chargeable/dischargeable secondary batteries are used as a power source for an electric vehicle (EV), a hybrid electric vehicle (HEV), a plug-in hybrid electric vehicle (P-HEV) and the like, in an attempt to solve air pollution and the like caused by existing gasoline vehicles using fossil fuel. Therefore, the demand for development of the secondary battery is growing.

Currently commercialized secondary batteries include a nickel cadmium battery, a nickel hydrogen battery, a nickel zinc battery, a lithium secondary battery, and the like. Among them, the lithium secondary battery has come into the spotlight because it has advantages, for example, hardly exhibiting memory effects compared to nickel-based secondary batteries and thus being freely charged and discharged, and having very low self-discharge rate and high energy density.

The manufacturing process of such a lithium secondary battery is roughly classified into an electrode process, an assembly process, and a formation process. The electrode process is again divided into an active material mixing process, an electrode coating process, a rolling process, a slitting process, a winding process, and the like. Among them, the electrode coating process is divided into a wet process of providing an active material slurry onto an electrode current collector and a dry process of providing the active material onto the current collector in a solid state as it is.

More effective methods for neatly processing a boundary part of patterns during electrode pattern formation and also uniformizing the thickness of the active material provided on the current collector are required.

### [DETAILED DESCRIPTION OF THE INVENTION]

### [Technical Problem]

It is an object of the present disclosure to provide a method for forming patterns on an electrode and a method for manufacturing an electrode having patterns formed thereon, which neatly process a boundary part of patterns during electrode pattern formation after providing an active material onto the current collector, and also make the thickness of the provided active material uniform.

However, the technical problems to be solved by embodiments of the present disclosure are not limited to the above-mentioned problems, and can be variously expanded within the scope of the technical idea included in the present disclosure.

### [Technical Solution]

According to one embodiment of the present disclosure, there is provided a method for forming patterns on a traveling electrode by providing an active material onto a current collector, the method comprising the steps of: (A) moving a doctor blade to the traveling electrode so that the end of the tip of the doctor blade faces the current collector; (B) maintaining the state in which the doctor blade has moved to the traveling electrode for a first predetermined period; and (C) moving the doctor blade in an opposite direction from the electrode.

The method comprises (D) rotating the doctor blade at a predetermined angle with the end of the tip as the center axis so that the doctor blade is inclined; and (E) maintaining the doctor blade in an inclined state for a second predetermined period, wherein on the basis of the traveling direction of the electrode, the tip of the doctor blade may be disposed on the downstream side, and the main body of the doctor blade may be disposed on the upstream side.

The method may further comprise (F) rotating the inclined doctor blade in an opposite direction at the predetermined angle with the end of the tip as the central axis.

The steps (A) to (F) may be repeatedly performed.

**In** the step (A), the tip of the doctor blade touches the current collector, so that the active material provided on the traveling electrode in the step (B) may be removed.

**In** the step (C), the tip of the doctor blade is separated from the current collector by a predetermined distance, so that the active material provided on the current collector of the electrode in the step (E) may be flattened.

The active material provided on the current collector of the traveling electrode is removed, so that a region where the current collector is exposed may become an uncoated part of the electrode, a region where the active material is flattened may become the coated part of the electrode, and the uncoated part and the coated part may be alternately arranged to form patterns on the electrode.

**In** the steps (A) to (C), the doctor blade may be in a vertical state with respect to the traveling electrode.

**In** the steps (A) to (C), the doctor blade may be perpendicular to the traveling electrode.

The main body and tip of the doctor blade may be integrally formed, and the tip may include an inclined plane.

The inclined plane of the tip may be disposed so as to direct toward the active material of the approaching electrode.

An angle of inclination of the inclined plane of the tip may have any one selected from more than 0 degrees and less than 90 degrees from the current collector of the traveling electrode.

The tip of the doctor blade further includes a curved surface at the end, and the curved surface and the inclined plane may be connected to each other.

The inclined plane of the tip of the doctor blade may consist of at least two planes having mutually different angles of inclination.

The method is used in a dry electrode process, and the active material may be provided as a powder on the current collector.

There is provided a method for manufacturing an electrode on which patterns are formed by the method according to the above embodiments, the method comprising: supplying an active material onto a current collector of the electrode through a feeder.

When the active material remains on the uncoated part of the electrode, the method may further comprise removing the active material by blowing air with an air blower.

The method may further comprise rolling the electrode on which the active material has been flattened with a rolling member.

There may be provided a secondary battery comprising the electrode on which patterns are formed by the method according to the above embodiments.

### [Advantageous Effects]

According to embodiments of the present disclosure, there is an advantage that the boundary part of the pattern can be neatly processed during electrode pattern formation in the electrode process, and the thickness of the provided active material can be flattened to make the thickness uniform.

In addition, by using the method for forming patterns on an electrode and the method for manufacturing an electrode having patterns formed thereon according to embodiments of the present disclosure, defects in the electrode manufactured thereby can be prevented or significantly reduced, thereby improving the performance of the battery manufactured thereby.

### [BRIEF DESCRIPTION OF THE DRAWINGS]

FIG. 1 is a conceptual diagram of an electrode manufacturing apparatus that can be used in the method for forming patterns on an electrode and the method for manufacturing an electrode having patterns formed thereon according to the present disclosure, which is a simplified diagram showing the electrode manufacturing apparatus viewed from the front.
FIG. 2 is a front view schematically showing a doctor blade included in the electrode manufacturing apparatus of FIG. 1.
FIG. 3(a) is a perspective view of the doctor blade of FIG. 2, and FIG. 3(b) is a perspective view of FIG. 3(a).
FIG. 4 is one use state diagram of the doctor blade of FIG. 2.
FIG. 5 is a front view schematically showing another embodiment of a doctor blade included in the electrode manufacturing apparatus of FIG. 1.
FIG. 6 is a reference diagram of the doctor blade of FIG. 5.
FIG. 7(a) is a perspective view of the doctor blade of FIG. 5, and FIG. 7(b) is a perspective view of FIG. 9(a).
FIG. 8 is one use state diagram of the doctor blade of FIG. 5.
FIG. 9 illustrates a method for forming patterns on an electrode according to an embodiment of the present disclosure.
FIG. 10 is a reference diagram of FIG. 9, which shows subsequent steps of FIG. 9.
FIG. 11 is a flowchart of a method for manufacturing an electrode comprising a method for forming patterns on the electrode of FIG. 9.

### [DETAILED DESCRIPTION OF THE EMBODIMENTS]

Hereinafter, various embodiments of the present disclosure will be described in detail with reference to the accompanying drawings so that those skilled in the art can easily carry out them. The present disclosure may be modified in various different ways, and is not limited to the embodiments set forth herein.

Portions that are irrelevant to the description will be omitted to clearly describe the present disclosure, and like reference numerals designate like elements throughout the description.

Further, in the drawings, the size and thickness of each element are arbitrarily enlarged or reduced for convenience of description, and thus, it is obvious that the present disclosure is not necessarily limited to those illustrated in the drawings. In the drawings, the thickness of some layers, regions, etc. are exaggerated for clarity . In the drawings, the thicknesses of some layers and region are exaggerated for convenience of description.

In addition, it will be understood that when an element such as a layer, film, region, or plate is referred to as being "on" or "above" another element, it can be directly on the other element or intervening elements may also be present. In contrast, when an element is referred to as being "directly on" another element, it means that other intervening elements are not present. Further, a certain portion being located "above" or "on" a reference portion means the certain portion being located above or below the reference portion and does not particularly mean the certain portion "above" or "on" toward an opposite direction of gravity. Meanwhile, similar to the case where it is described as being formed or located "on" or "above" another part, the case where it is described as being formed or disposed "below" or "under" another part will also be understood with reference to the above-mentioned contents.

Further, since the upper surface/lower surface of a specific member can be determined differently depending on which direction is used as a reference, throughout the description, 'upper surface' or 'lower surface' is defined as meaning two facing surfaces on the z-axis of the corresponding member.

Further, throughout the description, when a portion is referred to as "including" or "comprising" a certain component, it means that the portion can further include other components, without excluding the other components, unless otherwise stated.

Further, throughout the description, when referred to as "planar", it means when a target portion is viewed from the upper side, and when referred to as "cross-sectional", it means when a target portion is viewed from the side of a cross section cut vertically.

Now, a method for forming patterns on an electrode and a method for manufacturing an electrode having patterns formed thereon according to an embodiment of the present disclosure will be described.

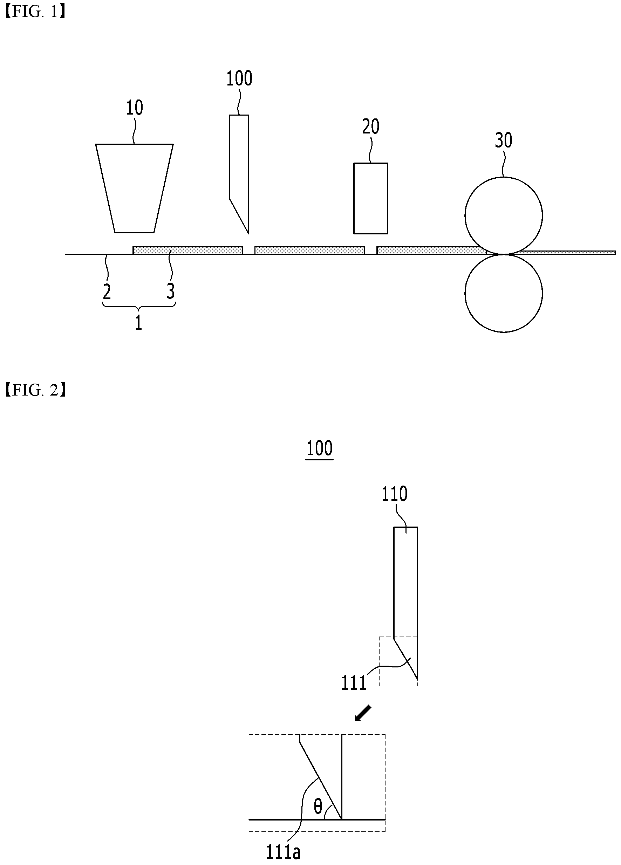

First, FIG. 1 is a conceptual diagram of an electrode manufacturing apparatus that can be used in the method for forming patterns on an electrode and the method for manufacturing an electrode having patterns formed thereon according to the present disclosure, which is a simplified diagram showing the electrode manufacturing apparatus viewed from the front.

Referring to FIG. 1, the electrode manufacturing apparatus according to an embodiment of the present disclosure largely includes a feeder 10, a doctor blade 100, an air blower 20, and a rolling member 30. If necessary, the apparatus may further include a drying unit, an inspection unit, and the like, and other components may include sub-components provided in a typical electrode manufacturing apparatus.

The feeder 10 supplies an electrode active material 3 to an electrode current collector 2. In the case of a dry electrode manufacturing process, the active material 3 is supplied as powder. A portion where the electrode active material 3 is not provided on the electrode current collector 2 or a portion where the active material 3 is removed with a doctor blade as described below becomes an uncoated part. When some of the electrode active material 3 remains on the electrode current collector 2 in a portion where the electrode active material 3 is not provided or in a portion (i.e., uncoated part) where the active material 3 is removed with a doctor blade, the air blower 20 blows air to blow away the electrode active material 3, thereby preventing the electrode active material 3 from remaining on the current collector. The rolling member 30 may be, for example, a rolling roll, and rolls the electrode active material 3 provided on the electrode current collector 2. The electrode active material 3 supplied through the feeder 10 may be one in which a conductive material, an organic binder polymer, an additive, and the like are selectively mixed, as necessary. In addition, other specific details regarding the feeder 10, air blower 20, and rolling member 30 are the same as those of the feeder, air blower, and rolling member provided in a typical electrode manufacturing apparatus, and therefore, a description thereof will be omitted.

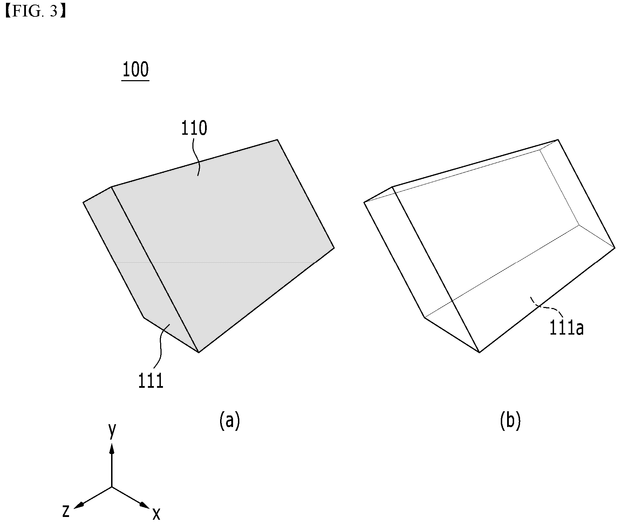

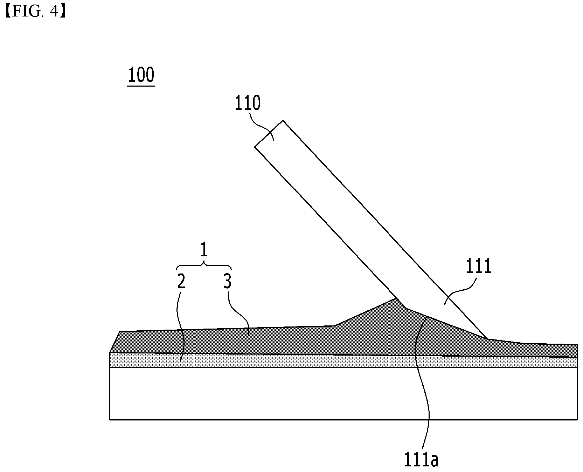

FIG. 2 is a front view schematically showing a doctor blade included in the electrode manufacturing apparatus of FIG. 1. FIG. 3(a) is a perspective view of the doctor blade of FIG. 2, and FIG. 3(b) is a perspective view of FIG. 3(a). FIG. 4 is one use state diagram of the doctor blade of FIG. 2.

Referring to FIGS. 2 and 3, the doctor blade 100 according to an embodiment of the present disclosure includes a main body 110 and a tip 111 located at one end part of the main body (an end part facing the electrode). The main body 110 and the tip 111 may be integrally formed. By means of the lower end part including the tip 111 of the doctor blade 100, a pattern is formed on the electrode 1, and the active material 3 is flattened, as described below.

The inclination angle θ of the inclined plane 111a from the electrode current collector 2 may be, for example, any one selected from more than 0 degrees and less than 90 degrees, for example, any one selected from 10 degrees or more and 80 degrees or less, and for example, any one selected from 10 degrees or more and 45 degrees or less.

The tip 111 of the doctor blade 100 is made of an inclined plane 111a, so that the tip is sharp. Further, the tip 111 of the doctor blade 100 includes an inclined plane 111a. The inclined plane 111a faces a direction opposite to the traveling direction of the electrode 1. That is, the inclined plane 111a of the tip 111 of the doctor blade 100 is directed toward the active material 3 of the approaching electrode.

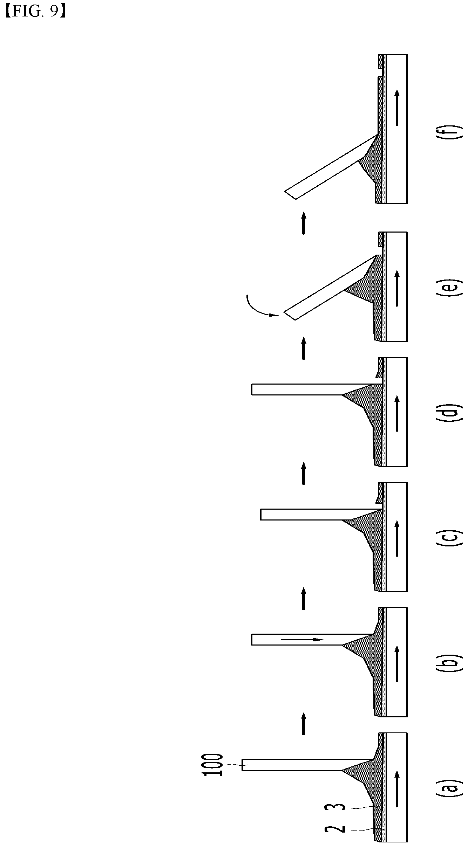

When the doctor blade 100 is disposed vertically with respect to the electrode 1, it is advantageous to form patterns on an electrode with the end of the tip 111 of the doctor blade 100 (that is, form a boundary part of the active material 3 provided on the electrode current collector 2). Pattern formation will be described in detail later with reference to FIGS. 9(a) to 9(f).

When the doctor blade 100 lies obliquely with respect to the electrode 1, more specifically, when the tip 111 is directed in the traveling direction of the electrode 1 and the main body 110 is disposed more rearward than the tip with respect to the traveling direction of the electrode 1, that is, when the tip 111 is disposed on the upstream side of the traveling direction of an electrode and the main body 110 is disposed on the downstream side of the traveling direction of an electrode, it is advantageous for uniformizing (flattening) the thickness of the active material 3 provided on the electrode current collector 2. That is, the resistance of the active material 3 hitting the tip 111 is reduced by the inclined surface 111a as shown in FIG. 4, compared to the case where the tip is made of a rectangular parallelepiped.

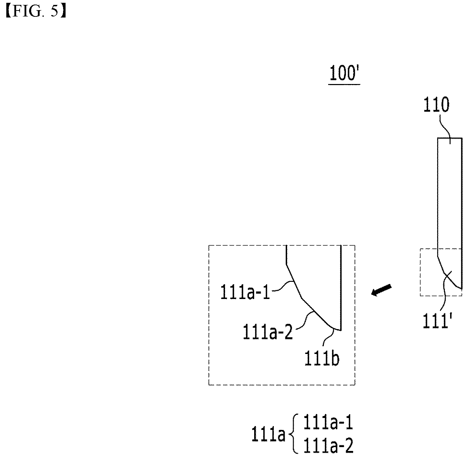

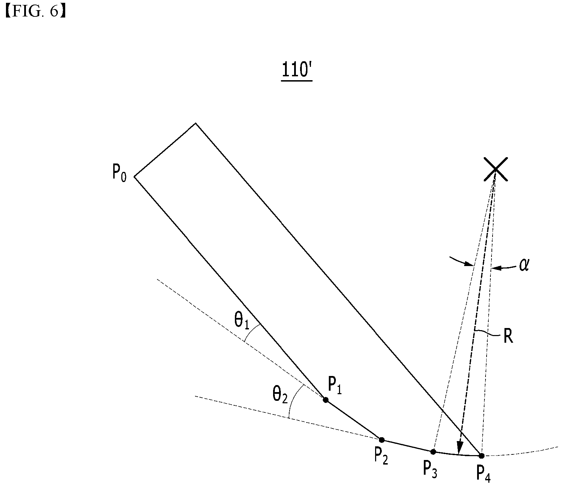

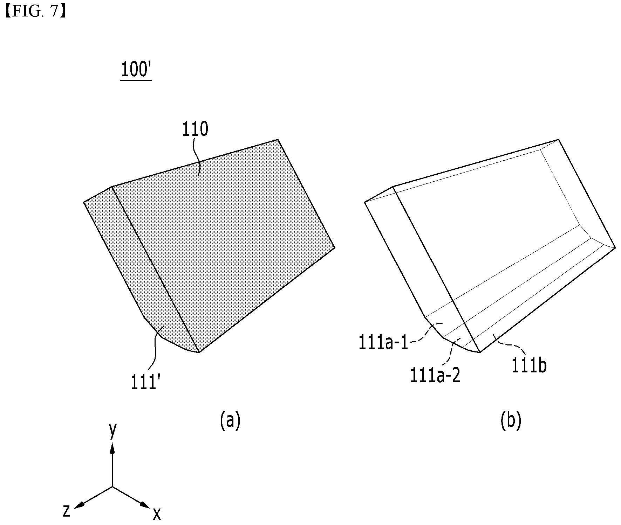

FIG. 5 is a front view schematically showing another embodiment of a doctor blade included in the electrode manufacturing apparatus of FIG. 1. FIG. 6 is a reference diagram of the doctor blade of FIG. 5. FIG. 7(a) is a perspective view of the doctor blade of FIG. 5, and FIG. 7(b) is a perspective view of FIG. 9(a).

The doctor blade 100' shown in FIG. 5 is an embodiment in which the tip 111 of the doctor blade 100 shown in FIG. 2 is partially modified. FIG. 6 explains in more detail the tip 111' of the doctor blade 100' of FIG. 5.

More specifically, the tip 111' includes at least one inclined plane 111a and one curved surface 111b. Among them, the curved surface 111b is located at the end of the tip 111' of the doctor blade 100'. For example, in FIG. 6, it means a surface between P3 and P4. In other words, the end of the tip 111' of the doctor blade 100' is processed into round shape. The end of the tip 111' of the doctor blade 100' is formed as a curved surface 111b, and therefore, it is possible to prevent excessive pressure from being concentrated on the tip when the tip touches the current collector 2 or the active material 3 of the electrode, which could cause the tip to wear out or become partially damaged.

The tip 111' of the doctor blade 100' has an inclined plane 111a following a curved surface 111b located at the end. That is, the curved surface 111b and the inclined plane 111a are connected to each other. The inclined plane 111a may be provided in one number, and may be provided as two inclined planes 111a-1 and 111a-2 having mutually different angles θ₁ and θ₂, as shown in this specification. At this time, an angle θ2 between the end of the tip 111' of the doctor blade 100' and the inclined plane 111a-2 disposed closer than the inclined plane 111a-1 is larger than an angle θ₁ between the end of the tip 111' and the inclined plane 111a-1. When flattening the active material 3, the doctor blade 100' contacts the active material 3 to further reduce the resistance received from the active material 3. Accordingly, it is possible to flatten the active material 3 more effectively.

Here, referring to FIG. 6, the angle θ₂ therebetween means, for example, an angle between an extension line which connects between P₁ and P₂ corresponding to the inclined plane 111a-1 and an extension line which connects between P₂ and P₃ corresponding to the inclined plane 111a-2. In addition, the angle (θ2) therebetween means an angle between a line which extends between P₁ and P₂ corresponding to the inclined plane 111a-1 and a line which extends in the overall height (length) direction of the doctor blade 100'. The angle (θ₁) therebetween has any one value selected from more than 0 degrees and less than 45 degrees, and each of the angle (θ₂) therebetween has any one value selected from more than 0 degrees and less than 90 degrees, wherein the angle θ₂ therebetween may be larger than the angle θ₁ therebetween.

Meanwhile, the number of inclined planes is not limited to those set forth above, and can be adjusted in accordance with an environment in which the invention is implemented. In addition, the size ratio of the plurality of inclined planes is not limited to those illustrated, and can be adjusted in accordance with an environment in which the invention is implemented.

Further, the curved surface 111b has a radius of curvature R and a central angle α, wherein the radius of curvature R and the central angle α can be variously adjusted in accordance with an environment in which the invention is implemented.

The inclined plane 111a and the curved surface 111b of the tip 111' of the doctor blade 100' is directed in a direction opposite to the traveling direction of the electrode 1. That is, the inclined plane 111a and the curved surface 111b of the tip 111' of the doctor blade 100' are directed toward the active material 3 of the approaching electrode.

When the doctor blade 100' is disposed vertically with respect to the electrode 1, an electrode pattern is formed by the end of the tip 111' of the doctor blade 100'. That is, a boundary part of the active material 3 provided on the electrode current collector 2 is formed (see FIGS. 9(a) to 9(d)).

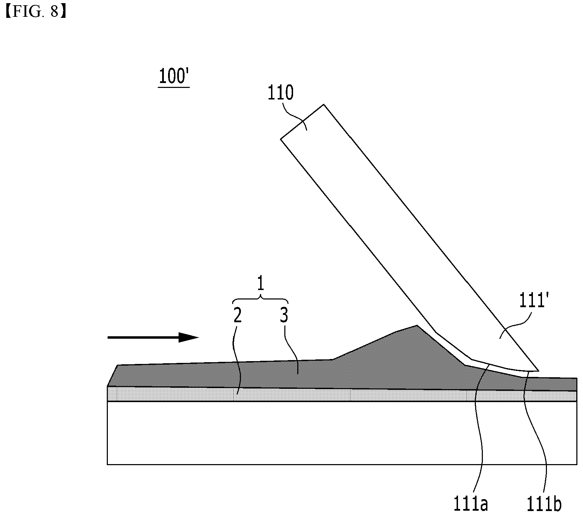

In addition, when the doctor blade 100' lies obliquely with respect to the electrode 1, more specifically, when the tip 111' is directed in the traveling direction of the electrode 1 and the main body 110 is disposed more rearward than the tip with respect to the traveling direction of the electrode 1, the thickness of the active material 3 provided on the electrode current collector 2 is uniformized (flattened). For this, refer to the use state diagram of FIG. 8, FIG. 9(e), and FIG. 10.

Since other descriptions of the doctor blade 100' and process details overlap with the description of the doctor blade 100 of FIG. 2, refer to those described above in FIGS. 2 to 4.

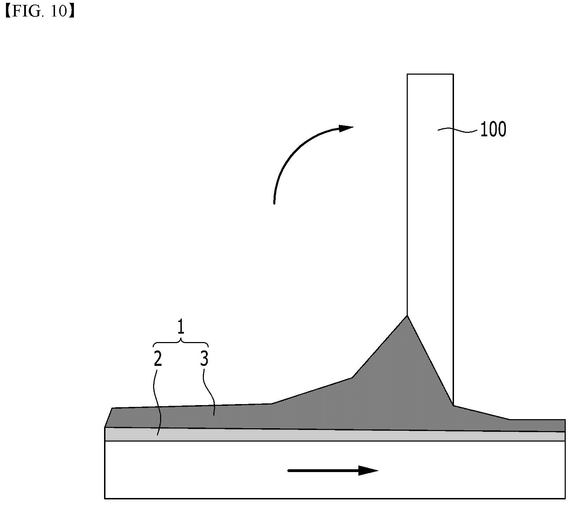

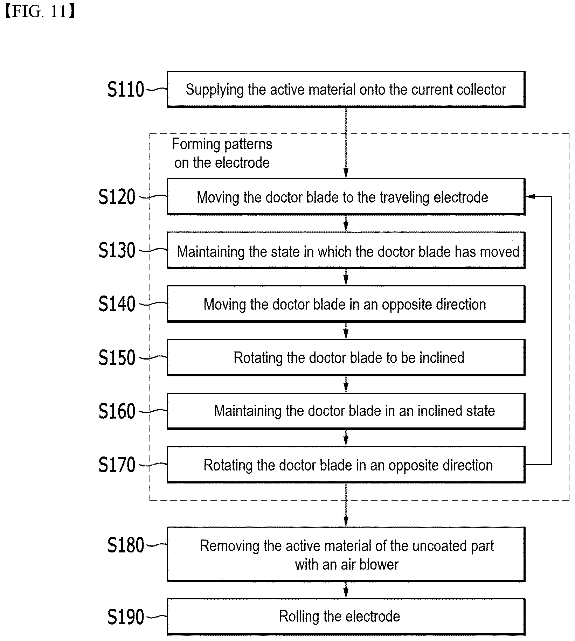

FIG. 9 illustrates a method for forming patterns on an electrode according to an embodiment of the present disclosure. FIG. 10 is a reference diagram of FIG. 9, which shows subsequent steps of FIG. 9. FIG. 11 is a flowchart of a method for manufacturing an electrode comprising a method for forming patterns on the electrode of FIG. 9.

Referring to FIGS. 9 and 10, a method for forming patterns on an electrode with a doctor blade (see steps S120 to S170) and a method for manufacturing an electrode comprising a process of forming patterns on the electrode (see steps S110 to S190) will be described.

A step (S110) of supplying the electrode active material 3 onto the current collector 2 of the electrode through the feeder 10 (see FIG. 1) is performed. At this time, the electrode 1 travels in the traveling direction (see the traveling direction arrow of the electrode in FIG. 9).

Among the methods for manufacturing an electrode, the method for forming patterns on an electrode corresponds to steps S120 to S170, and is as follows.

As shown in FIG. 9(b), a step (S120) of moving the doctor blade (e.g., downward) to the traveling electrode so that the tip 111 of the doctor blade 100 faces the current collector 2 of the electrode 1 is performed. For example, the tip 111 (the end of the tip) of the doctor blade 100 touches the current collector 2 of the electrode 1. At this time, the point where the tip 111 of the doctor blade 100 begins to touch the current collector 2 of the electrode 1 becomes the starting point of the uncoated part, which will be described later, that is, the boundary between the coated part and the uncoated part.

Next, as shown in FIG. 9(c), a step (S130) of maintaining the state in which the doctor blade 100 has moved to the traveling electrode (i.e., a state where it has moved to the traveling electrode in step S120) for a first predetermined period so as to remove the active material 3 provided on the current collector of the traveling electrode 1 is performed.

For example, in step S130, the active material 3 provided on the current collector 2 is removed with the doctor blade 100 to form a region where the current collector 2 is exposed to the outside. The first predetermined period may be modified and changed in various ways in accordance with the various environments in which the invention is implemented, and the electrode to be manufactured.

In more detail, the current collector 2 of the electrode 1 continues to travel in the traveling direction D. However, the active material 3 of the electrode 1 is blocked by the doctor blade 100 and cannot travel. This is because, as described above in step S120, the end of the tip 111 of the doctor blade 100 touches the surface of the current collector 2 of the electrode. Accordingly, as shown in FIG. 9(c), the active material 3 is removed to form an uncoated part, which is a region where the current collector 2 is exposed.

Next, as shown in FIG. 9(d), a step (S140) of moving the doctor blade 100 in an opposite direction (e.g., upward) from the electrode is performed. That is, as step S130 of removing the active material 3 is completed, the formation of the uncoated part is completed.

In step S120 to step S140, the doctor blade 100 is in an upright state with respect to the traveling electrode 1. For example, the doctor blade 100 may be in a vertical state as shown in FIGS. 9(b) to 9(d). If the electrode 1 travels in the horizontal direction, the doctor blade 100 may be in a vertical state. Alternatively, the doctor blade 100 may be perpendicular to the traveling direction of the electrode 1.

However, the present disclosure is not limited thereto, and the angle of the doctor blade 100 may be partially adjusted in accordance with an environment in which the invention is implemented, or may be arranged so as to have an inclination angle of less than 90 degrees with respect to the traveling electrode 1, within an allowable range of error.

Subsequent to step S140 or simultaneously with step S140, a step (S150) of rotating the doctor blade 100 at a predetermined angle with the tip 111 as the central axis so that the doctor blade 100 is inclined as shown in FIG. 9(e) is performed. The doctor blade 100 is inclined downward toward the electrode 1 with the end of the tip 111 of the doctor blade 100 as the central axis, so that the doctor blade 100 lies obliquely with respect to the electrode 1. At this time, the tip 111 faces the traveling direction of the electrode 1, and the main body 110 is disposed more rearward than the tip 111. That is, the tip 111 is disposed on the downstream side of the traveling direction of the electrode, and the main body 110 is disposed on the upstream side of the traveling direction of the electrode.

Next, as shown in FIG. 9(f), a step (S160) of maintaining the state in which the doctor blade 100 is inclined in step S150 for a second predetermined period so as to flatten the active material provided on the current collector 2 of the electrode 1. At this time, the electrode 1 continues to travel in the traveling direction, and the end of the tip 111 of the doctor blade 100 is separated from the current collector 2 of the traveling electrode 1 by a predetermined distance. The separation distance may be, for example, the thickness of the active material 3 to be flattened, and is previously determined in accordance with an environment in which the invention is implemented and/or the electrode to be manufactured. In step S160, the flattened portion of the active material 3 provided on the current collector 1 of the electrode 1 becomes a coated part of the electrode 1.

By the above-mentioned steps, patterns in which a region formed in steps S120 to S140, and a region formed in steps S150 to S160 are alternately located are formed on the electrode 1. For example, patterns in which the uncoated part and the coated part are alternately located are formed on the electrode 1.

Subsequently, as shown in FIG. 10, a step (S170) of rotating the doctor blade 100 in an opposite direction by a predetermined angle that has rotated in step S140 with the end of the tip 111 as the central axis. Accordingly, the doctor blade 100 is placed under a state shown in FIG. 9(a). In step S110, the active material 3 is continuously supplied onto the current collector 2 of the above electrode through the feeder 10 (see FIG. 1), and the electrode 1 repeats steps S120 to S170 in this order again in a state where it continues to travel in the traveling direction. If steps S120 to S170 are repeated several times in this order as described above, for example, it is possible to manufacture the electrode 1 formed with patterns where the coated part and the uncoated part are alternately repeated.

When the active material 3 remains in the uncoated part of the electrode 1 where steps S120 to S170 have been performed, the method further comprises a step (S180) of removing the active material by blowing air with an air blower 20 (see FIG. 1). In addition, the method further comprises a step (S190) of rolling the electrode 1 on which the active material 3 has been flattened, using a rolling member 30 (see FIG. 1). Step S180 may be performed between steps S170 and S190 as shown in FIG. 11. Alternatively, step S180 may be performed after step S190.

On the other hand, in FIGS. 9 to 11, the process of forming patterns on the electrode 1 using the doctor blade 100 of FIG. 2 has been explained, but the present disclosure is not limited thereto, and can be similarly applied to the process of forming patterns on the electrode 1 using the doctor blade 100' shown in FIG. 5. Furthermore, in addition to the doctor blade 100 or the doctor blade 100', various modifications and changes can be made, such as being similarly applicable to the use of doctor blades that have been modified or modified.

The embodiments of the present disclosure described above can be applied, for example, to a dry electrode manufacturing process.

The electrode according to the present disclosure may be a positive electrode or a negative electrode. That is, the manufacturing process of the electrode according to the present disclosure is not particularly limited to the positive electrode or the negative electrode, can be easily applied to any electrode manufacturing process, and can manufacture different electrodes depending on the material (e.g., positive electrode active material or negative electrode active material) used for manufacturing each electrode. Accordingly, the term "electrode" used herein for electrode, electrode active material 3, electrode current collector 2, etc. may mean both a positive electrode and a negative electrode, unless specifically defined.

In the dry electrode manufacturing process of the present disclosure, the electrode active material 3 and the binder polymer are mixed in a dry manner to obtain a mixture.

The positive electrode active material can be used without particular limitation as long as it is a material that contains lithium, and thus can intercalate/deintercalate lithium ions. For example, the positive electrode active material may include a layered compound such as lithium cobalt oxide (LiCoO₂) and lithium nickel oxide (LiNiO₂) or a compound substituted with one or more transition metals; lithium manganese oxides such as the chemical formula Li₁₊ₓMn₂₋ₓO₄ (where x is 0 ~ 0.33), LiMnO₃, LiMn₂O₃, LiMnO₂; lithium copper oxide (Li₂CuO₂); vanadium oxides such as LiV₃O₈, LiV₃O₄, V₂O₅, and Cu₂V₂O₇; a Ni-site type lithium nickel oxide represented by chemical formula LiNi₁₋ₓMₓO₂ (where M=Co, Mn, Al, Cu, Fe, Mg, B or Ga, and x=0.01 ~ 0.3); lithium manganese composite oxide represented by chemical formulae LiMn₂₋ₓMₓO₂ (where M = Co, Ni, Fe, Cr, Zn or Ta, and x = 0.01 ~ 0.1) or Li₂Mn₃MO₈ (where, M = Fe, Co, Ni, Cu or Zn); lithium manganese composite oxide having a spinel structure represented by chemical formula LiNiₓMn₂₋ₓO₄; LiMn₂O₄ in which a part of Li in the chemical formula is substituted with an alkaline earth metal ion; disulfide compound; Fe₂(MoO₄)₃, or the like, but are not limited thereto. Further, the positive electrode may have a positive electrode mixture layer comprising metallic lithium, a carbon material, a metal compound or a mixture thereof. The metal compound may be a compound containing one or more metal elements selected from the group consisting of Si, Ge, Sn, Pb, P, Sb, Bi, Al, Ga, In, Ti, Mn, Fe, Co, Ni, Cu, Zn, Ag, Mg, Sr, and Ba, or a mixture thereof.

The negative electrode may be manufactured by providing a negative electrode active material onto a negative electrode current collector and rolling it, or may be manufactured in a dry manner similarly to the above-mentioned positive electrode manufacturing process, and may optionally further contain a conductive material, an organic binder polymer, an additive, etc. as in the positive electrode, if necessary.

In addition, the negative electrode active material may include, for example, a carbon material and a silicon material. The carbon material refers to a carbon material containing carbon atoms as a main component, and examples of the carbon material include graphite having a graphene structure completely formed as in natural graphite, soft carbon having a low-crystalline graphene structure (structure in which hexagonal honeycomb-shaped planes of carbons are arranged in a layered form), and hard carbon, artificial graphite, expanded graphite, carbon fiber, non-graphitizable carbon, carbon black, acetylene black, Ketjen black, carbon nanotube, fullerene, activated carbon, graphene, carbon nanotube, and the like in which these structures are mixed with amorphous portions, and preferably, may include one or more selected from the group consisting of natural graphite, artificial graphite, and carbon nanotube. More preferably, the carbon material includes natural graphite and/or artificial graphite, and may include one or more among carbon blacks and carbon nanotubes together with the natural graphite and/or artificial graphite. In this case, the carbon material may include 0.1 to 10 parts by weight of carbon black and/or carbon nanotubes based on 100 parts by weight of the total carbon material, and more specifically, 0.1 to 5 parts by weight; or 0.1 to 2 parts by weight of carbon black and/or carbon nanotube based on 100 parts by weight of the total carbon material.

In addition, the silicon material is a particle containing silicon (Si) as a main component as a metal component, and may include one or more of silicon (Si) particles and silicon oxide (SiO_{X}, where 1 ≤ X ≤ 2) particles. As an example, the silicon material may include silicon (Si) particles, silicon monoxide (SiO) particles, silicon dioxide (SiO₂) particles, or a mixture of these particles.

Further, according to the present disclosure, the current collector includes a metal plate having electrical conductivity and may be one selected suitably depending on polarity of electrodes known in the field of secondary batteries.

Further, according to the present disclosure, the conductive material is not particularly limited, as long as it causes no chemical change in the corresponding battery and has conductivity.

Further, according to the present disclosure, the binder resin is not particularly limited as long as it is a compound that assists binding between the active material and the conductive material and binding to the current collector.

According to embodiments of the present disclosure, when a pattern is to be formed on the surface of an electrode, an additional process for forming the pattern is not required, thereby improving process efficiency. In addition, by using the electrode manufacturing apparatus according to embodiments of the present disclosure, the specific surface area of the electrode can be effectively expanded, which allows more electrolyte ions to be stored when charging the battery, thereby improving battery performance.

The terms representing directions such as the front side, the rear side, the left side, the right side, the upper side, and the lower side have been used in the present embodiment, but it is obvious to those skilled in the art that the terms used are provided simply for convenience of description, and may become different according to the position of an object, the position of an observer, or the like.

The electrode manufactured by applying the control method of the electrode manufacturing apparatus according to the present embodiment described above may be included in a secondary battery, and a plurality of such secondary batteries may be gathered together to form a battery module. The battery modules can be mounted together with various control and protection systems such as a BMS (battery management system), and a cooling system to form a battery pack.

The secondary battery, the battery module or the battery pack can be applied to various devices. Specifically, it can be applied to vehicle means such as an electric bike, an electric vehicle, and a hybrid electric vehicle, but are not limited thereto, and can be applied to various devices capable of using a secondary battery.

Although the invention has been described in detail with reference to preferred embodiments thereof, the scope of the present disclosure is not limited thereto, and various modifications and improvements can be made by those skilled in the art using the basic concepts of the present disclosure, which are defined in the appended claims, which also falls within the scope of the present disclosure.

### [Description of Reference Numerals]

1: electrode
2: current collector
3: active material
10: feeder
20: air blower
30: rolling member
100: doctor blade
110, 110': doctor blade
111, 111': tip
111a: inclined plane
111b: curved surface

## Claims

1. A method for forming patterns on a traveling electrode by providing an active material onto a current collector, the method comprising the steps of:
(A) moving a doctor blade to the traveling electrode so that the end of the tip of the doctor blade faces the current collector;
(B) maintaining the state in which the doctor blade has moved to the traveling electrode for a first predetermined period; and
(C) moving the doctor blade in an opposite direction from the electrode.

2. The method according to claim 1, comprising:
(D) rotating the doctor blade at a predetermined angle with the end of the tip as the center axis so that the doctor blade is inclined; and
(E) maintaining the doctor blade in an inclined state for a second predetermined period,
wherein on the basis of the traveling direction of the electrode, the tip of the doctor blade is disposed on the downstream side, and the main body of the doctor blade is disposed on the upstream side.

3. The method according to claim 2, further comprising:
(F) rotating the inclined doctor blade in an opposite direction at the predetermined angle with the end of the tip as the central axis.

4. The method according to claim 3, wherein:
the steps (A) to (F) are repeatedly performed.

5. The method according to claim 2, wherein:
in the step (A), the tip of the doctor blade touches the current collector, so that the active material provided on the traveling electrode in the step (B) is removed.

6. The method according to claim 5, wherein:
in the step (C), the tip of the doctor blade is separated from the current collector by a predetermined distance, so that the active material provided on the current collector of the electrode in the step (E) is flattened.

7. The method according to claim 6, wherein:
the active material provided on the current collector of the traveling electrode is removed, so that a region where the current collector is exposed becomes an uncoated part of the electrode,
a region where the active material is flattened becomes the coated part of the electrode, and
the uncoated part and the coated part are alternately arranged to form patterns on the electrode.

8. The method for forming patterns on an electrode according to claim 1, wherein:
in the steps (A) to (C), the doctor blade is in a vertical state with respect to the traveling electrode.

9. The method for forming patterns on an electrode according to claim 1, wherein:
in the steps (A) to (C), the doctor blade is perpendicular to the traveling electrode.

10. The method for forming patterns on an electrode according to claim 1, wherein:
the main body and tip of the doctor blade are integrally formed, and the tip includes an inclined plane.

11. The method for forming patterns on an electrode according to claim 10, wherein:
the inclined plane of the tip is disposed so as to direct toward the active material of the approaching electrode.

12. The method for forming patterns on an electrode according to claim 10, wherein:
an angle of inclination of the inclined plane of the tip has any one selected from more than 0 degrees and less than 90 degrees from the current collector of the traveling electrode.

13. The method for forming patterns on an electrode according to claim 10, wherein:
the tip of the doctor blade further includes a curved surface at the end, and
the curved surface and the inclined plane are connected to each other.

14. The method for forming patterns on an electrode according to claim 13, wherein:
the inclined plane of the tip of the doctor blade consists of at least two planes having mutually different angles of inclination.

15. The method for forming patterns on an electrode according to claim 1, wherein:
the method is used in a dry electrode process, and the active material is provided as a powder on the current collector.

16. A method for manufacturing an electrode on which patterns are formed by the method according to any one of claims 1 to 3, the method comprising:
supplying an active material onto a current collector of the electrode through a feeder.

17. The method for manufacturing an electrode according to claim 16, wherein:
when the active material remains on the uncoated part of the electrode, the method further comprises removing the active material by blowing air with an air blower.

18. The method for manufacturing an electrode according to claim 16, further comprising:
rolling the electrode on which the active material has been flattened with a rolling member.

19. A secondary battery comprising the electrode on which patterns are formed by the method according to claim 1.
